# EUROPEAN PATENT APPLICATION

(11) **EP 4 765 405 A1**
(43) Date of publication of application: **24.06.2026**
(21) Application number: 25772348.6
(22) Date of filing: 27.02.2025
(51) Int. Cl.: H01M 50/267, H01M 50/213, H01M 50/211, H01M 50/105

(54) **SECONDARY BATTERY, BATTERY MODULE, AND BATTERY PACK INCLUDING SAME**

(30) Priority: 14.03.2024 KR 20240036007
(71) Applicant: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2025/002759
(87) International publication number: WO 2025/192909

(57) **Abstract**

A battery pack according to the present disclosure includes cylindrical secondary batteries provided in plurality; and pouch-type secondary batteries positioned between the plurality of cylindrical secondary batteries and having a curved surface corresponding to a side surface of the cylindrical secondary battery on a side facing the cylindrical secondary battery.

## Description

### TECHNICAL FIELD

### CROSS-REFERENCE TO RELATED APPLICATIONS

This application is based on and claims priority from Korean Patent Application No. 10-2024-0036007, filed on March 14, 2024, with the Korean Intellectual Property Office, the disclosure of which is incorporated herein in its entirety by reference.

### TECHNICAL FIELD

The present disclosure relates to a secondary battery, a battery module, and a battery pack including the same. More specifically, the present disclosure relates to a secondary battery having improved energy density per volume, a battery module, and a battery pack including the same.

### BACKGROUND ART

As the technology development and demand for electric vehicles, mobile devices, and the like increase, the demand for secondary batteries as an energy source is increasing. Unlike primary batteries, secondary batteries are reusable batteries that can be recharged after a single use. Secondary batteries include a positive electrode and a negative electrode. When metal is oxidized at the positive electrode, electricity is generated by the movement of electrons released from the metal.

Secondary batteries are classified into a pouch type, a cylindrical type, and a prismatic type depending on the case accommodating the electrode assembly. Among these, cylindrical secondary batteries have the advantage of being easy to manufacture and stable.

A single secondary battery may not be able to generate sufficiently high voltage by itself. Therefore, a battery pack may be formed by connecting a plurality of secondary batteries to have sufficient voltage. At least some of the secondary batteries included in the battery pack are connected in series to generate a higher voltage than the voltage of individual secondary batteries.

However, when cylindrical secondary batteries are arranged to form a battery pack, there is a problem that a gap is formed between neighboring cylindrical secondary batteries, resulting in a loss of energy density per volume.

### SUMMARY

### TECHNICAL PROBLEM

The present disclosure is designed to solve the above-described problems, and therefore the present disclosure is directed to providing a secondary battery, a battery module, and a battery pack including the same that minimize gaps that occur when stacking cylindrical secondary batteries.

Technical problems to be solved by the present disclosure are not limited to the above-described problems, and other problems not mentioned herein may be clearly understood by those having ordinary skill in the art from the following description of the present disclosure.

### TECHNICAL SOLUTION

A battery pack according to one embodiment of the present disclosure includes cylindrical secondary batteries provided in plurality; and pouch-type secondary batteries positioned between the plurality of cylindrical secondary batteries and having a curved surface corresponding to a side surface of the cylindrical secondary battery on a side facing the cylindrical secondary battery.

The pouch-type secondary batteries may be provided in plurality to surround the side surface of the cylindrical secondary battery, and the plurality of pouch-type secondary batteries and the cylindrical secondary battery may form a unit.

The plurality of pouch-type secondary batteries forming the unit may have an arrangement angle at equal intervals with respect to a central axis of the cylindrical secondary battery.

The plurality of pouch-type secondary batteries forming the unit may have the arrangement angle of 90°.

The curved surface of the pouch-type secondary battery may be provided to cover 1/4 of the side surface of the cylindrical secondary battery.

The pouch-type secondary battery may further have outer surfaces that are planar on the opposite side of the curved surface.

The outer surfaces of the pouch-type secondary battery may be provided in plurality.

The outer surfaces of the pouch-type secondary battery may be provided in a pair perpendicular to each other.

The pouch-type secondary battery may further have intervening surfaces connecting the curved surface and the outer surfaces.

The pouch-type secondary batteries may be provided in plurality to surround the outer surface of the cylindrical secondary battery, and the plurality of the pouch-type secondary batteries and the cylindrical secondary battery may form a unit, wherein the unit may be configured such that the intervening surfaces of the pouch-type secondary battery face intervening surfaces of the neighboring pouch-type secondary battery.

The outer surfaces of the pouch-type secondary battery may be provided in a pair perpendicular to each other, and the intervening surfaces may extend perpendicular to each of the outer surfaces from the pair of outer surfaces.

Two or more pouch-type secondary batteries may be provided between the cylindrical secondary batteries adjacent to each other.

The cross-section of the unit may form a square, and the plurality of pouch-type secondary batteries may have the same shape.

The pouch-type secondary battery may include a plurality of electrodes that are bent and stacked.

Electrodes closer to the curved surface among the plurality of electrodes may be smaller in size.

A pouch-type secondary battery according to one embodiment of the present disclosure includes a curved surface configured to correspond to a side surface of the cylindrical secondary battery; outer surfaces that are planar positioned on the opposite side of the curved surface; and intervening surfaces that are planar connecting the curved surface and the outer surfaces.

The curved surface, the intervening surfaces, and the outer surfaces may be arranged in one direction.

The outer surfaces may be provided in a pair perpendicular to each other.

The intervening surfaces may extend perpendicular to each of the outer surfaces from the pair of outer surfaces.

A battery module according to one embodiment of the present disclosure includes cylindrical secondary batteries provided in plurality; and pouch-type secondary batteries positioned between the plurality of cylindrical secondary batteries and having a curved surface corresponding to a side surface of the cylindrical secondary battery on a side facing the cylindrical secondary battery.

### ADVANTAGEOUS EFFECTS

The battery pack and the like according to the present disclosure may minimize gaps that occur when stacking cylindrical secondary batteries by including pouch-type secondary batteries positioned between cylindrical secondary batteries provided in plurality.

The battery pack and the like according to the present disclosure may fill gaps formed between cylindrical secondary batteries with only a single pouch-type secondary battery by including a unit formed by a plurality of pouch-type secondary batteries having the same shape surrounding the cylindrical secondary battery.

The effects to be obtained by the present disclosure are not limited to the effects mentioned above, and other effects not mentioned may be clearly understood by those having ordinary skill in the art from the following description of the present disclosure.

### BRIEF DESCRIPTION OF THE DRAWINGS

FIG. 1 is a perspective view illustrating a cut-out portion of a battery pack according to Embodiment 1 of the present disclosure.
FIG. 2 is a perspective view illustrating a unit accommodated by the battery pack illustrated in FIG. 1.
FIG. 3 is a plan view illustrating the unit illustrated in FIG. 2.
FIG. 4 is a perspective view of the pouch-type secondary battery illustrated in FIG. 2.
FIG. 5 is a perspective view illustrating a plurality of electrodes included in the pouch-type secondary battery illustrated in FIG. 4.
FIG. 6 is an assembly view illustrating that the plurality of electrodes illustrated in FIG. 5 are assembled to form a pouch-type secondary battery.
FIG. 7 is an assembly view illustrating that the plurality of units illustrated in FIG. 2 are assembled to form a battery pack.
FIG. 8 is a plan view illustrating a unit according to Embodiment 2 of the present disclosure.
FIG. 9 is a plan view illustrating a unit according to Embodiment 3 of the present disclosure.
FIG. 10 is a plan view illustrating a unit according to Embodiment 4 of the present disclosure.
FIG. 11 is a plan view illustrating a unit according to Embodiment 5 of the present disclosure.
FIG. 12 is a plan view illustrating a secondary battery according to Embodiment 6 of the present disclosure.

### DETAILED DESCRIPTION

Hereinafter, preferred embodiments of the present disclosure will be described in detail with reference to the accompanying drawings to enable those having ordinary skill in the art to easily carry out the present disclosure. However, the present disclosure may be embodied in various different forms and is not limited or restricted by the following embodiments.

In order to clearly describe the present disclosure, detailed descriptions of portions unrelated to the present disclosure or known technologies that may unnecessarily obscure the gist of the present disclosure have been omitted. When assigning reference numerals to components in each drawing in this specification, the same or similar reference numerals are assigned to the same or similar components throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The various embodiments and terms used herein are not intended to limit the technical features described herein to any particular embodiment, and should be understood to include various modifications, equivalents, or substitutes of the corresponding embodiments.

In connection with the description of the drawings, similar reference numerals may be used for similar or related components.

The singular form of a noun corresponding to an item may include one or more of the items, unless the relevant context clearly indicates otherwise.

As used herein, each of the phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof.

The term "and/or" includes any combination of a plurality of related listed components, or any one of a plurality of related listed components.

Terms such as " first ", "second", or "first" or "second" may be used simply to distinguish one such component from another such component, and do not limit such components in any other respect (e.g., importance or order).

When a component (e.g., a first component) is referred to as "coupled" or "connected" to another component (e.g., a second component), with or without the terms "functionally" or "communicatively," it means that the component may be connected to the other component directly (e.g., wired), wirelessly, or through a third component.

The terms "include" or "have" are intended to designate the presence of features, numbers, steps, actions, components, parts, or combinations thereof described herein, and do not preclude the presence or addition of one or more other features, numbers, steps, actions, components, parts, or combinations thereof.

When a component is said to be "connected", "coupled", "supported" or "in contact" with another component, this includes not only cases where the components are directly connected, coupled, supported or in contact, but also cases where the components are indirectly connected, coupled, supported or in contact through a third component.

When a component is said to be positioned "on" another component, this includes not only cases where a component is in contact with another component, but also cases where another component exists between the two components.

Meanwhile, the terms "upper-lower direction", "lower side", and "front-back direction" used in the following description are defined based on the drawings, and the shape and position of each component are not limited by these terms.

Hereinafter, embodiments according to the present disclosure will be described in detail with reference to the accompanying drawings.

### Embodiment 1

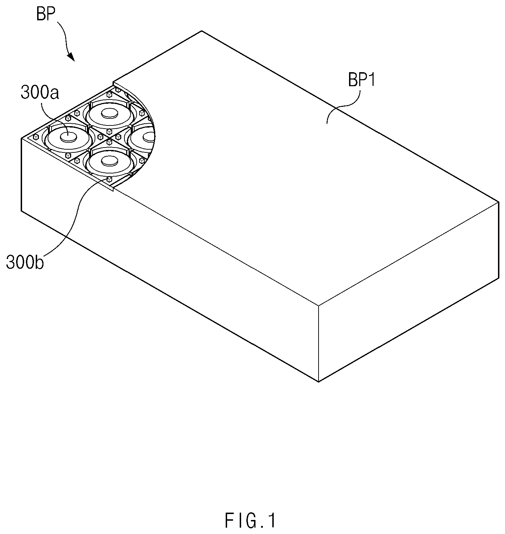

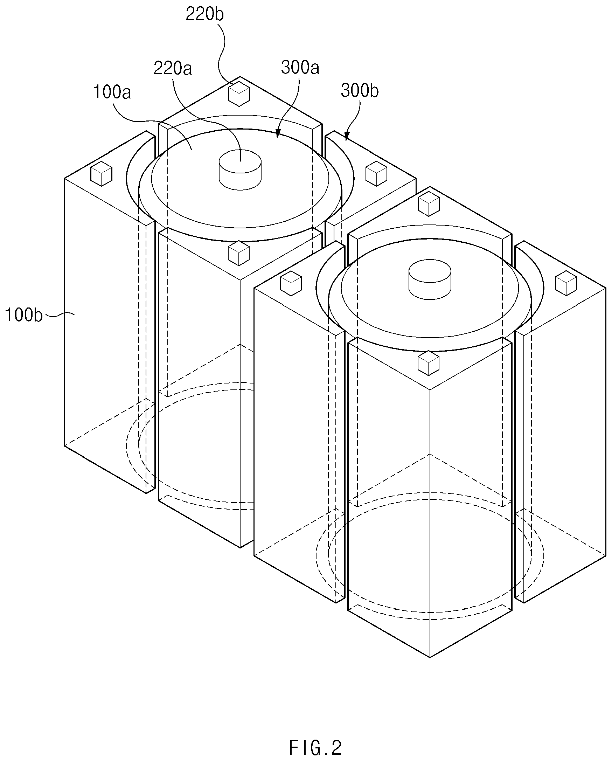

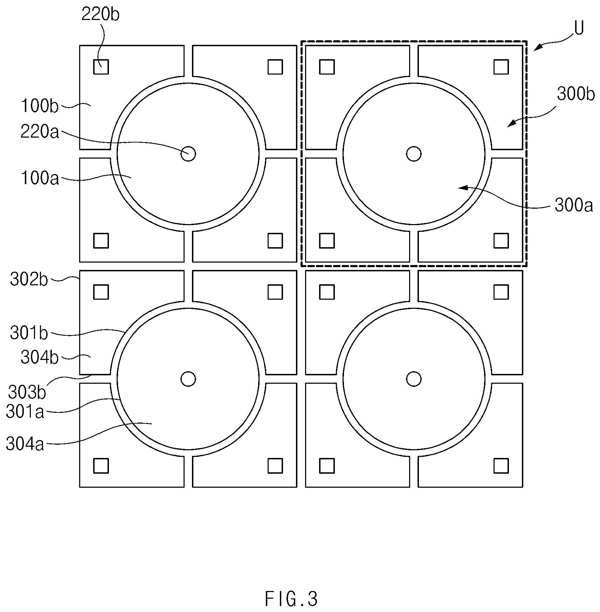

FIG. 1 is a perspective view illustrating a cut-out portion of a battery pack BP according to Embodiment 1 of the present disclosure. FIG. 2 is a perspective view illustrating a unit U accommodated by the battery pack BP illustrated in FIG. 1. FIG. 3 is a plan view illustrating the unit U illustrated in FIG. 2.

Referring to FIGS. 1 to 3, a battery pack BP according to Embodiment 1 of the present disclosure will be described.

A secondary battery B may be provided to generate electricity. The secondary battery B may be provided in various types. For example, the secondary battery B may be provided in a cylindrical type, a prismatic type, a pouch type, or the like depending on the type of battery case of the secondary battery B.

Among the types of secondary battery B, the cylindrical secondary battery 300a has the advantage of being easy to process because the electrode assembly accommodated in the battery case is formed by rolling. Since the electrode assembly is formed by rolling, the electrode assembly may have a roughly cylindrical shape, and the battery case may be in a cylindrical shape to correspond thereto.

Among the types of secondary battery B, the pouch-type secondary battery 300b has the advantage of reducing the volume occupied by the battery case because the battery case is provided as a pouch. Furthermore, given that the pouch is sufficiently flexible, the pouch-type secondary battery 300b has the advantage of being relatively free to change its shape.

Prior to a detailed description, the following may be defined. The cylindrical secondary battery 300a may include a first battery case 100a. The pouch-type secondary battery 300b may include a second battery case 100b. The cylindrical secondary battery 300a may include a first electrode lead 220a. The pouch-type secondary battery 300b may include a second electrode lead 220b.

A single secondary battery B may not be able to generate a sufficiently high voltage by itself. Therefore, as illustrated in FIG. 1, a battery pack BP may be formed by connecting a plurality of secondary batteries B to have a sufficient voltage. At least some of the secondary batteries B included in the battery pack BP may be connected in series to generate a voltage higher than the voltage of individual secondary batteries B. Furthermore, a plurality of secondary batteries B may form a battery module BM, and a plurality of battery modules BM may form a battery pack BP. When it is difficult to manage too many secondary batteries B into one battery pack BP, a battery module BM may be first formed with an appropriate number of secondary batteries B to facilitate management. In this case, the battery pack BP illustrated in FIG. 1 may be interpreted as a battery module BM. However, for convenience of description, the following description assumes that the secondary batteries B directly form the battery pack BP.

A plurality of secondary batteries B may be accommodated in a pack case BP1 to form a battery pack BP. For example, as illustrated in FIG. 1, the cylindrical secondary battery 300a may be accommodated in the pack case BP1 having a cuboidal shape. However, when the plurality of cylindrical secondary batteries 300a are accommodated in the pack case BP1, gaps may be formed due to their shape no matter how close they are disposed to each other. This is because the cylindrical secondary battery 300a has a circular cross-section, and the circular batteries may not be arranged without any gaps. To overcome this, the gaps may be reduced by arranging the cylindrical secondary batteries 300a in a zigzag manner rather than arranging them at the intersections of imaginary lines intersecting horizontally and vertically, but the gaps may not disappear as a result.

If the gaps that may occur between the plurality of cylindrical secondary batteries 300a may be filled with secondary batteries B, the energy density per volume of the battery pack BP may be increased, which may allow the batteries to be used longer or generate a higher voltage. In particular, since vehicles or the like requiring a battery pack BP have a limited space that the battery pack BP may occupy, there may be a need for a battery pack BP that produces as much energy as possible within the same volume.

To solve the above problem, as illustrated in FIGS. 1 to 3, a battery pack BP including a plurality of cylindrical secondary batteries 300a may include a pouch-type secondary battery 300b positioned between the plurality of cylindrical secondary batteries 300a. At this time, the pouch-type secondary battery 300b may have a curved surface 301b corresponding to the side surface 301a of the cylindrical secondary battery 300a on a side facing the cylindrical secondary battery 300a to reduce a gap that may occur between the cylindrical secondary battery 300a and the pouch-type secondary battery 300b. Here, the side surface 301a of the cylindrical secondary battery 300a may be a surface corresponding to the side surface 301a of the cylinder. In other words, the side surface 301a of the cylindrical secondary battery 300a may be circular when viewed in cross-section, and the curved surface 301b of the pouch-type secondary battery 300b corresponding thereto may form a circle or an arc. The curved surface 301b of the pouch-type secondary battery 300b may be any shape of a curved surface 301b that is not part of a circle. However, if the curved surface 301b of the pouch-type secondary battery 300b forms a curved surface 301b corresponding to the side surface 301a of the cylindrical secondary battery 300a, when the pouch-type secondary battery 300b and the cylindrical secondary battery 300a are positioned to be in contact with each other, a gap may be prevented from being formed between the pouch-type secondary battery 300b and the cylindrical secondary battery 300a. If a gap is not formed between the pouch-type secondary battery 300b and the cylindrical secondary battery 300a, or the gap is reduced, this may mean that the secondary battery B is positioned at a point where a gap may be formed, and thus the energy density per volume may be increased from the perspective of the battery pack BP.

In particular, as described above, the pouch-type secondary battery 300b is free to change its shape, and thus may have a shape corresponding to the gap formed between the cylindrical secondary batteries 300a and the pouch-type secondary battery 300b. As mentioned above, the energy density per volume may increase as the gap decreases, so that, when the pouch-type secondary battery 300b is used to fill the gap, it may effectively fill the gap, thereby effectively increasing the energy density per volume. Furthermore, since the pouch-type secondary battery 300b uses a pouch film as a battery case, the thickness of the battery case may be thinner than that of the cylindrical secondary battery 300a or the prismatic secondary battery B. In other words, since the energy density of the pouch-type secondary battery 300b is greater than that of the cylindrical secondary battery 300a or the prismatic secondary battery B of the same volume, filling the gap with the pouch-type secondary battery 300b may effectively increase the energy density per volume.

In addition, from the perspective of the pouch-type secondary battery 300b, the pouch-type secondary battery 300b has a disadvantage that its durability is lower than that of other types of secondary batteries B. In particular, problems such as a burst of the pouch constituting the battery case or the like may cause leakage of the electrolyte or the like provided therein. Therefore, when the battery pack BP is composed of only the pouch-type secondary battery 300b, it is necessary to supplement the durability. On the other hand, the battery case of the cylindrical secondary battery 300a may be made of a material having stronger rigidity than the pouch. That is, the cylindrical secondary battery 300a may be more durable than the pouch-type secondary battery 300b. Considering that the number of pouch-type secondary batteries 300b is relatively smaller when the battery pack BP is formed like the battery pack BP according to Embodiment 1 of the present disclosure than when composed of only the pouch-type secondary battery 300b, the battery pack BP in Embodiment 1 according to the present disclosure may have better durability than the battery pack BP composed of only the pouch-type secondary battery 300b.

Furthermore, the fact that the pouch-type secondary batteries 300b are accommodated in the gap between the plurality of cylindrical secondary batteries 300a may mean that the pouch-type secondary batteries 300b may be at least partially supported by the cylindrical secondary batteries 300a. Accordingly, when venting occurs due to a side reaction in the pouch-type secondary battery 300b as the case of the cylindrical secondary battery 300a with strong rigidity supports the battery case of the pouch-type secondary battery 300b, deformation of the battery case may be minimized.

In other words, including the cylindrical secondary battery 300a and the pouch-type secondary battery 300b together in one battery pack BP may be preferable in terms of increasing the energy density per volume for the cylindrical secondary battery 300a, and in terms of supplementing durability for the pouch-type secondary battery 300b.

At this time, the pouch-type secondary batteries 300b may be provided in plurality to surround the outer surface 302b of the cylindrical secondary battery 300a. When a single pouch-type secondary battery 300b is intended to surround the entire outer surface 302b of a single cylindrical secondary battery 300a, the pouch-type secondary battery 300b needs to have a shape having a cylindrical hole. However, since such a shape may be difficult to manufacture, a plurality of pouch-type secondary batteries 300b may be provided to surround a cylindrical secondary battery 300a for the convenience of manufacture.

Here, a plurality of pouch-type secondary batteries 300b and a cylindrical secondary battery 300a may form a unit U. A plurality of pouch-type secondary batteries 300b and a cylindrical secondary battery 300a may be defined as a single unit. A single unit U may include one cylindrical secondary battery 300a and a plurality of pouch-type secondary batteries 300b adjacent thereto. When a single unit U is formed, each unit U may be managed separately, which may facilitate management.

The fact that the plurality of pouch-type secondary batteries 300b form the unit U may mean that the pouch-type secondary batteries 300b included in each unit U are distinguished. For example, when comparing Embodiment 1 illustrated in FIG. 2 with other embodiments, the pouch-type secondary battery 300b illustrated in FIG. 2 corresponds not only to a single cylindrical secondary battery 300a, but also to all neighboring cylindrical secondary batteries 300a, and thus it may be difficult to be viewed as forming a unit U with the cylindrical secondary battery 300a.

The plurality of pouch-type secondary batteries 300b forming the unit U may have an arrangement angle at equal intervals with respect to a central axis of the cylindrical secondary battery 300a. Of course, even when the arrangement angles of the plurality of pouch-type secondary batteries 300b are at non-equal intervals, it can be said to be an embodiment to which the ideas of the present disclosure are applied. However, in this case, a plurality of pouch-type secondary batteries 300b having arrangement angles at non-equal intervals may have their respective shapes corresponding thereto to reduce the gaps that may be formed in the battery pack BP. A plurality of pouch-type secondary batteries 300b having arrangement angles at equal intervals may have fewer types of shapes to fill the gap than when the arrangement angles thereof are at non-equal intervals.

For example, as illustrated in FIG. 3, the plurality of pouch-type secondary batteries 300b forming the unit U may have the arrangement angle of 90°. However, the present disclosure is not limited thereto, and the plurality of pouch-type secondary batteries 300b forming the unit U may have various arrangement angles.

In this case, the curved surface 301b of the pouch-type secondary battery 300b may be provided to cover 1/4 of the side surface 301a of the cylindrical secondary battery 300a. In some cases, a pouch-type secondary battery 300b that does not cover the entire height direction of the side surface 301a of the cylindrical secondary battery 300a may be considered so as not to cover 1/4 of the side surface 301a of the cylindrical secondary battery 300a while having the arrangement angle of 90°. Ultimately even in this case, to avoid the formation of a gap, one pouch-type secondary battery 300b may not cover 1/4 of the side surface 301a of the cylindrical secondary battery 300a, and instead, another pouch-type secondary battery 300b may cover the remainder of the side surface 301a of the cylindrical secondary battery 300a, or a configuration with a different purpose may fill the remainder of the side surface 301a of the cylindrical secondary battery 300a.

The plurality of pouch-type secondary batteries 300b may need to satisfy the following considerations to reduce the gap that may be formed in the battery pack BP.

To reduce the gap that may be formed in the battery pack BP, the curved surface 301b of the pouch-type secondary battery 300b may be in an arc shape to prevent the gap from being formed when in contact with the side surface 301a of the cylindrical secondary battery 300a, as described above. Furthermore, it is necessary to prevent the gap from being formed between each of the units U. Therefore, each of the units U needs to be in contact with each other, and the gap needs be prevented from being formed therebetween.

For reference, FIGS. 2 and 3 illustrate that the cylindrical secondary battery 300a and the pouch-type secondary battery 300b are spaced apart and not in contact with each other, but this is merely a convenient way to distinguish the cylindrical secondary battery 300a from the pouch-type secondary battery 300b. Preferably, the cylindrical secondary battery 300a and the pouch-type secondary battery 300b and/or the neighboring pouch-type secondary batteries 300b may be positioned to be in contact with each other.

The pouch-type secondary battery 300b may have outer surfaces 302b that are planar on the opposite side of the curved surface 301b. The outer surface 302b of the pouch-type secondary battery 300b may be an edge surface of the unit U. The unit U may be formed by positioning a plurality of pouch-type secondary batteries 300b surrounding a single cylindrical secondary battery 300a. Therefore, the pouch-type secondary battery 300b may be positioned relatively outward. Therefore, the outer surface 302b, which is the outermost surface with respect to the pouch-type secondary battery 300b, may form the edge surface of the unit U. As described above, it may be preferable for the edge surface of the unit U to be planar so that the units U are in contact with each other and no gaps are formed therebetween. A gap is formed when the battery pack BP is composed of only the cylindrical secondary battery 300a, and this is because the side surface 301a of the cylindrical secondary battery 300a is a circular curved surface 301b. For the same reason, it may not be preferable for the edge surface of the unit U to be a curved surface 301b capable of forming a gap. However, even when the edge surface of the unit U is a curved surface 301b corresponding to a neighboring edge surface and no gap is formed therebetween, the ideas of the present disclosure may be applied thereto.

When the edge surface of the unit U is a plane, the cross-section of the unit U may be considered as a polygon. The cross-section of the unit U may be a square so that gaps are prevented from being formed between the polygons by arranging them. Of course, when the cross-section of the unit U is a regular polygon, it may be an equilateral triangle, a regular hexagon, or the like. At this time, the outer surface 302b of the pouch-type secondary battery 300b included in the unit U may be formed to correspond to a corner of the polygon formed by the cross-section. For the convenience of description, the following description assumes that the cross-section of the unit U is a square.

The outer surface 302b of the pouch-type secondary battery 300b may be provided in plurality. The outer surfaces 302b of the plurality of pouch-type secondary batteries 300b may form two surfaces extending from the corner. Furthermore, as mentioned above, when the unit U has a square cross-section, the outer surface 302b of the pouch-type secondary battery 300b may be provided in a pair perpendicular to each other, as illustrated in FIG. 3

Furthermore, as illustrated in FIG. 3, the outer surface 302b of the pouch-type secondary battery 300b may form half of the edge surface of the unit U.

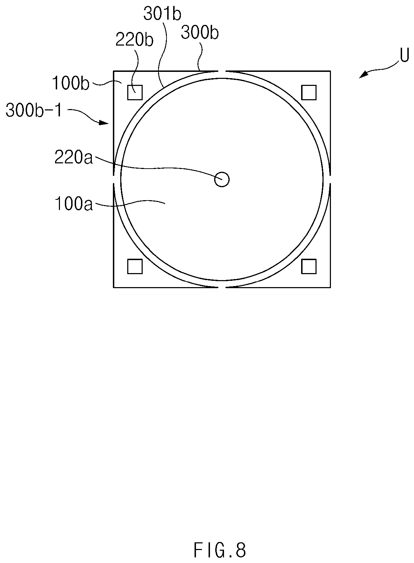

The pouch-type secondary battery 300b may have an intervening surface 303b connecting the curved surface 301b and the outer surface 302b. The unit U may be configured such that the intervening surfaces 303b of the pouch-type secondary battery 300b face the intervening surfaces 303b of the neighboring pouch-type secondary battery 300b. As in another embodiment illustrated in FIG. 8, the intervening surface 303b may not be formed in the pouch-type secondary battery 300b. However, when the intervening surfaces 303b are formed in the pouch-type secondary battery 300b, the neighboring pouch-type secondary batteries 300b are supported by the intervening surfaces 303b, and thus the shape of the unit U may be stably maintained. Furthermore, when a side reaction occurs in the pouch-type secondary battery 300b and thus the shape of the pouch-type secondary battery 300b changes as the pressure inside the pouch-type secondary battery 300b increases, the neighboring pouch-type secondary battery 300b may be supported by the intervening surface 303b to prevent the change in shape.

The intervening surfaces 303b may extend perpendicular to each of the outer surfaces 302b from the pair of outer surfaces 302b. That is, the intervening surfaces 303b may be in a pair to extend from the pair of outer surfaces 302b. As mentioned above, the intervening surface 303b may support the neighboring pouch-type secondary battery 300b, and the angle at which the pressure may be effectively supported is an angle perpendicular to the pressure, so that the intervening surface 303b may extend perpendicular to the direction facing the neighboring secondary battery B. In the above description, the unit U may have a square cross-section, and the outer surface 302b of the pouch-type secondary battery 300b may form an edge of the square, so that the above-described intervening surface 303b may extend perpendicular to the outer surface 302b.

At least two or more pouch-type secondary batteries 300b may be provided between the cylindrical secondary batteries 300a adjacent to each other. FIGS. 2 and 3 illustrate that two pouch-type secondary batteries 300b are provided in one direction between the adjacent cylindrical secondary batteries 300a. However, the ideas of the present disclosure are not limited thereto, and may be applied to three or more pouch-type secondary batteries 300b being provided in one direction between the adjacent cylindrical secondary batteries 300a. In this way, when a plurality of pouch-type secondary batteries 300b are provided between the adjacent cylindrical secondary batteries 300a, it is easy to distinguish the units U, and thus management of the units U is possible.

The plurality of pouch-type secondary batteries 300b may have the same shape. As illustrated in FIGS. 2 and 3, when the units U have a square cross-section and the pouch-type secondary batteries 300b are provided to correspond to each corner of the square, each of the pouch-type secondary batteries 300b may have the same shape. When the pouch-type secondary batteries 300b having the same shape are used, only one type of pouch-type secondary battery 300b may be produced compared to when pouch-type secondary batteries 300b having a plurality of shapes are used, thereby facilitating production management, and there is no need to assemble pouch-type secondary batteries 300b differentially from the perspective of assembly, thereby facilitating assembly.

In the above, it has been described that the pouch-type secondary batteries 300b are inserted between the cylindrical secondary batteries 300a. Hereinafter, the formation of the pouch-type secondary battery 300b will be described in detail.

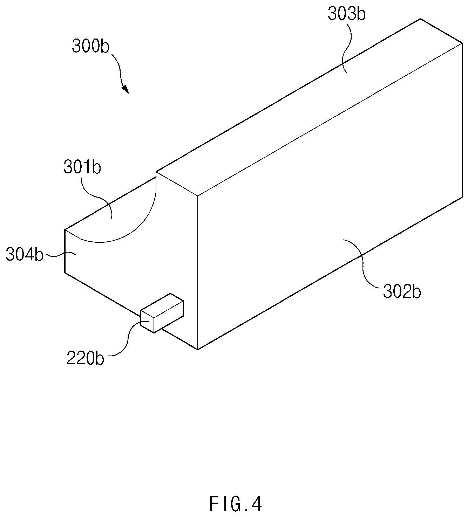

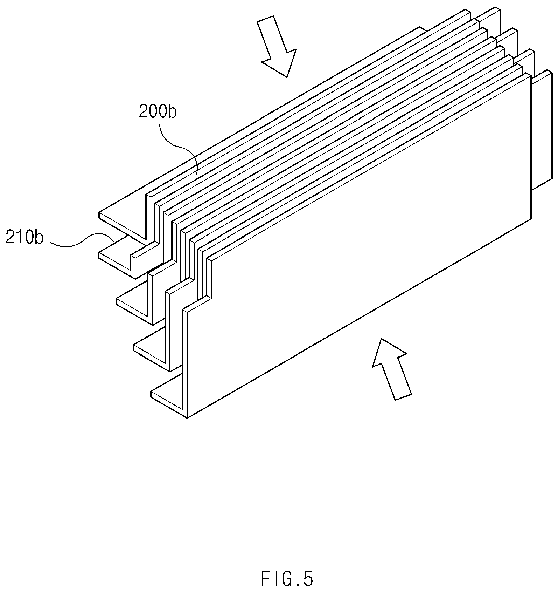

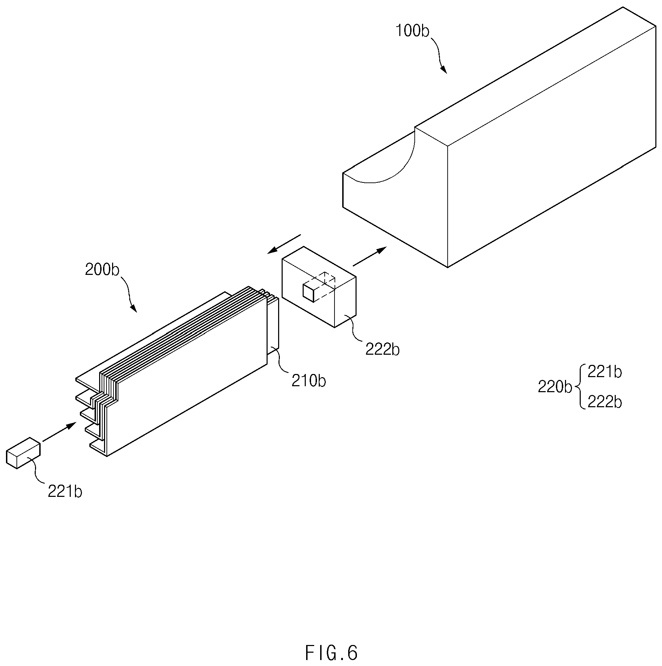

FIG. 4 is a perspective view of the pouch-type secondary battery 300b illustrated in FIG. 2. FIG. 5 is a perspective view illustrating a plurality of electrodes 200b included in the pouch-type secondary battery 300b illustrated in FIG. 4. FIG. 6 is an assembly view illustrating that the plurality of electrodes 200b illustrated in FIG. 5 are assembled to form a pouch-type secondary battery 300b.

As illustrated in FIGS. 4 to 6, a pouch-type secondary battery 300b according to Embodiment 1 of the present disclosure is described.

As illustrated in FIG. 4, the pouch-type secondary battery 300b may be provided. As mentioned above, the pouch-type secondary battery 300b may include a second battery case 100b. The pouch-type secondary battery 300b may include a second electrode lead 220b exposed to the outside of the second battery case 100b. The second battery case 100b may include the curved surface 301b, the outer surfaces 302b, and/or the intervening surfaces 303b mentioned above. The curved surface 301b, the intervening surfaces 303b, and/or the outer surfaces 302b may be arranged in one direction. More specifically, at both ends of the curved surface 301b, a pair of intervening surfaces 303b may be bent and extend, respectively, and at the ends of the pair of intervening surfaces 303b, a pair of outer surfaces 302b may be bent and extend, respectively, to meet each other. In other words, the curved surface 301b, the intervening surface 303b, and/or the outer surface 302b may form the side surface of the second battery case 100b.

The pouch-type secondary battery 300b may include a bottom surface 304b that covers an end of the side surface formed by the curved surface 301b, the intervening surfaces 303b, and/or the outer surfaces 302b. The bottom surfaces 304b may be provided in a pair at the upper and lower sides with reference to FIG. 2, and at the front and rear with reference to FIG. 4. The bottom surfaces 304b of the pouch-type secondary battery 300b may correspond to lead surfaces 304a provided to cover ends of the side surface 301a of the cylindrical secondary battery 300a.

As illustrated in FIG. 5, the pouch-type secondary battery 300b may include a plurality of electrodes 200b. The plurality of electrodes 200b may be accommodated in the second battery case 100b. The plurality of electrodes 200b may be bent and stacked. In other words, the plurality of electrodes 200b may define an imaginary line for bending in the longitudinal direction, and may include a portion extending in one direction with respect to the imaginary line for bending and a portion extending in another direction that is different from the one direction. More specifically, the portion extending in one direction of the electrode 200b and the portion extending in the other direction may be perpendicular to each other to correspond to a pair of perpendicular outer surfaces 302b of the pouch-type secondary battery 300b.

At this time, electrodes 200b closer to the curved surface 301b among the plurality of electrodes 200b may be smaller in size. If the sizes of the plurality of electrodes 200b are the same, it may be difficult to form the intervening surface 303b of the pouch-type secondary battery 300b at the angle mentioned above, or a separate configuration for forming the angle of the intervening surface 303b may need to be filled on the inner side of the intervening surface 303b. If the electrodes 200b closer to the curved surface 301b among the plurality of electrodes 200b are smaller in size, the angle of the intervening surface 303b may be more easily formed at the angle mentioned above.

In addition, the electrodes 200b may include electrode tabs 210b formed at longitudinal ends of the electrodes 200b. The electrodes 200b may be stacked such that the electrode tabs 210b forming the positive electrode and the electrode tabs 210b forming the negative electrode face opposite directions, respectively.

As illustrated in FIG. 6, a plurality of electrodes 200b may be stacked with the bent portions arranged side by side.

A second electrode lead 220b may be coupled to the electrode tabs 210b provided at one end of the plurality of electrodes 200b. The second electrode lead 220b may include a protruding electrode lead 221b and/or a concave electrode lead 222b. The protruding electrode lead 221b may protrude in one direction. The concave electrode lead 222b may have a groove formed therein.

After the second electrode lead 220b is coupled to the plurality of electrodes 200b, the coupled electrodes 200b may be accommodated in the second battery case 100b to form a secondary battery B.

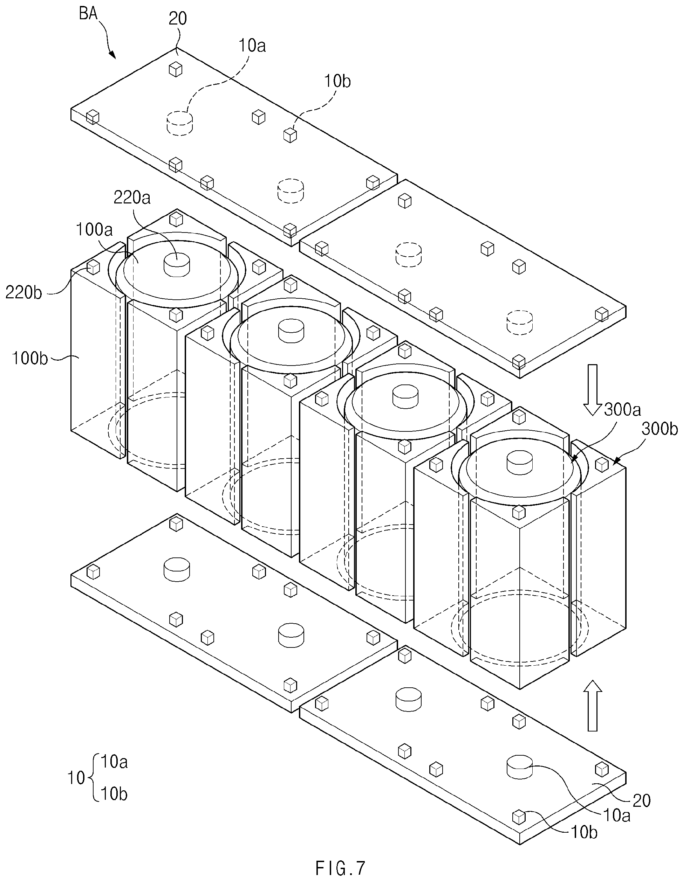

FIG. 7 is an assembly view illustrating that the plurality of units U illustrated in FIG. 2 are assembled to form a battery pack BP.

A part of the assembly process of the battery pack BP according to Embodiment 1 of the present disclosure will be described with reference to FIG. 7.

As illustrated in FIG. 7, the battery pack BP may include a busbar assembly BA to allow electrical connections between the plurality of units U. The busbar assembly BA may electrically connect a plurality of units U or cylindrical secondary batteries 300a and pouch-type secondary batteries 300b included in the plurality of units U, to generate a target voltage or to allow for easy management of the plurality of secondary batteries B.

The busbar assembly BA may include busbars 10 provided to be in contact with first electrode leads 220a or second electrode leads 220b. The busbar assembly BA may include a busbar frame 20 configured to support the busbars 10.

The busbar 10 may include a first busbar 10a configured to be in contact with the first electrode lead 220a. The busbar 10 may include a second busbar 10b configured to be in contact with the second electrode lead 220b. The first busbar 10a may be formed to be concave to accommodate the protruding first electrode lead 220a when the first electrode lead 220a protrudes. The first busbar 10a may protrude to be accommodated in the concave first electrode lead 220a when the first electrode lead 220a is concave. For example, as illustrated in FIG. 7, the first electrode lead 220a positioned on the upper side may protrude, and the first busbar 10a positioned on the upper side to correspond to the upper first electrode lead 220a may be formed to be concave. Furthermore, the first electrode lead 220a positioned on the lower side may be concave, and the first busbar 10a positioned on the lower side to correspond to the lower first electrode lead 220a may be convex.

Similar to the relationship between the first electrode lead 220a and the first busbar 10a, the relationship between the second electrode lead 220b and the second busbar 10b may be defined. Specifically, the second busbar 10b may be formed to be concave to accommodate the protruding second electrode lead 220b when the second electrode lead 220b protrudes. The second busbar 10b may protrude to be accommodated in the concave second electrode lead 220b when the second electrode lead 220b is concave. For example, as illustrated in FIG. 7, the second electrode lead 220b positioned on the upper side may protrude, and the second busbar 10b positioned on the upper side to correspond to the upper second electrode lead 220b may be formed to be concave. Furthermore, the second electrode lead 220b positioned on the lower side may be concave, and the second busbar 10b positioned on the lower side to correspond to the lower second electrode lead 220b may be convex.

Hereinafter, embodiments different from Embodiment 1 will be described. The contents common to Embodiment 1 will be omitted as much as possible, and other embodiments will be described focusing on the differences. That is, it is obvious that the contents not described in the other embodiments may be supplemented by the contents of Embodiment 1 if necessary.

### Embodiment 2

FIG. 8 is a plan view illustrating a unit U according to Embodiment 2 of the present disclosure.

The unit U according to Embodiment 2 of the present disclosure will be described with reference to FIG. 8.

Embodiment 2 differs from Embodiment 1 in that the pouch-type secondary battery 300b-1 has a different shape.

The plurality of pouch-type secondary batteries 300b-1 included in a single unit U may not be in surface contact with each other. In other words, the pouch-type secondary batteries 300b-1 may not have intervening surfaces 303b therebetween.

### Embodiment 3

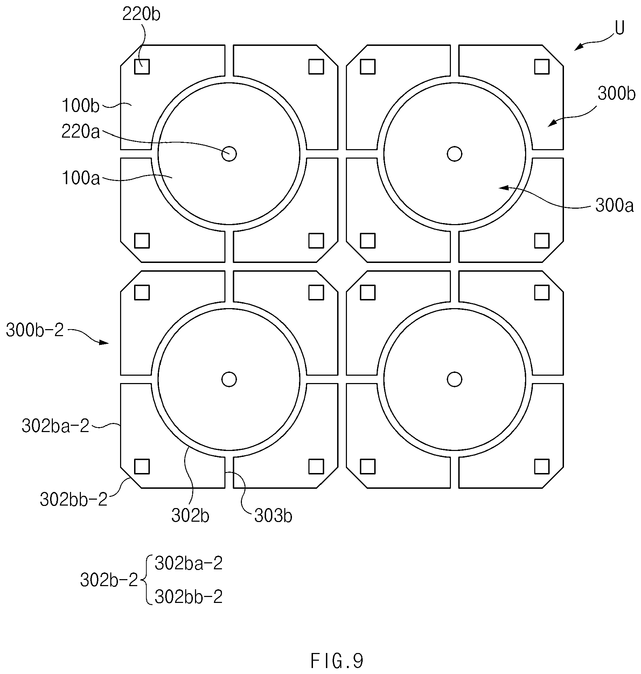

FIG. 9 is a plan view illustrating a unit U according to Embodiment 3 of the present disclosure.

The unit U according to Embodiment 3 of the present disclosure will be described with reference to FIG. 9.

Embodiment 3 differs from Embodiment 1 in that the pouch-type secondary battery 300b-2 has a different shape.

The outer surface 302b-2 of the pouch-type secondary battery 300b-2 may include a pair of first outer surfaces 302ba-2 each extending from a pair of intervening surfaces 303b and/or a second outer surface 302bb-2 connecting the pair of first outer surfaces 302ba-2. The first outer surface 302ba-2 may extend perpendicular to the intervening surface 303b at the intervening surface 303b. The second outer surface 302bb-2 may extend at a 45° angle with the first outer surface 302ba-2.

However, in this case, an intervening gap g-2 may be formed between the units U by the second outer surface 302bb-2. Through the intervening gap g-2, a heat pipe may be inserted, or a support for supporting the secondary battery B may be positioned.

### Embodiment 4

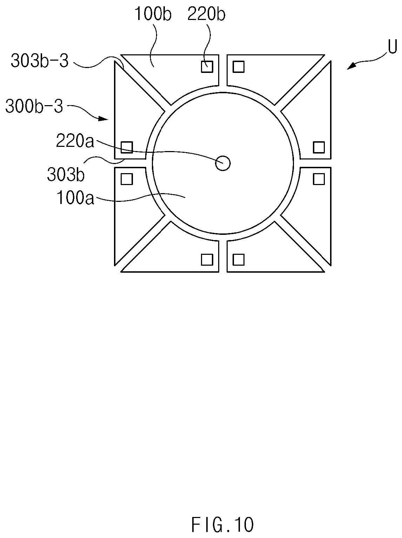

FIG. 10 is a plan view illustrating a unit U according to Embodiment 4 of the present disclosure.

The unit U according to Embodiment 4 of the present disclosure will be described with reference to FIG. 10.

Embodiment 4 differs from Embodiment 1 in that the pouch-type secondary battery 300b-3 has a different shape.

The plurality of pouch-type secondary batteries 300b-3 included in the unit U may be disposed at 45° intervals. Each of the pouch-type secondary batteries 300b-3 may be disposed in a total of eight, with two on both sides of each vertex of the square.

The eight pouch-type secondary batteries 300b-3 in the unit U may have the same shape.

The pouch-type secondary battery 300b-3 may be provided such that a pair of intervening surfaces 303b have different shapes. Specifically, the intervening surface 303b-3 corresponding to the vertex of the square may be provided to be longer than the intervening surface 303b corresponding to the side of the square. Furthermore, the angle between the surface extending from the intervening surface 303b-3 corresponding to the vertex of the square and the surface extending from the intervening surface 303b corresponding to the side of the square may be provided to be 45°.

### Embodiment 5

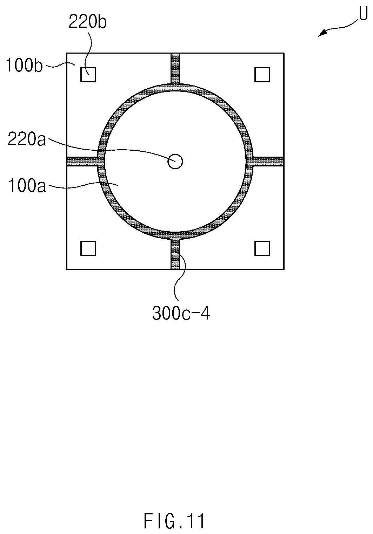

FIG. 11 is a plan view illustrating a unit U according to Embodiment 5 of the present disclosure.

The unit U according to Embodiment 5 of the present disclosure will be described with reference to FIG. 11.

Embodiment 5 differs from Embodiment 1 in that a cylindrical secondary battery 300a and pouch-type secondary batteries 300b are spaced apart or two adjacent pouch-type secondary batteries 300b are spaced apart.

A gap filler 300c-4 may be provided between the cylindrical secondary battery 300a and the pouch-type secondary batteries 300b or between adjacent pouch-type secondary batteries 300b. The gap filler 300c-4 may be configured to bond the secondary batteries B to each other and to allow for heat transfer between them. For example, the gap filler 300c-4 may be thermal grease or the like.

The gap filler 300c-4 may also be applied between the unit U and the unit U.

### Embodiment 6

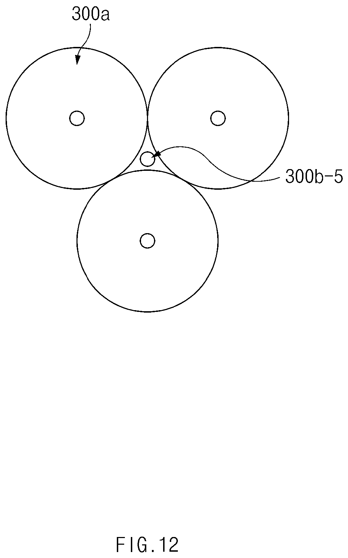

FIG. 12 is a plan view illustrating a secondary battery B according to Embodiment 6 of the present disclosure.

The secondary battery B according to Embodiment 6 of the present disclosure will be described with reference to FIG. 12.

Embodiment 6 differs from Embodiment 1 in that the pouch-type secondary battery 300b-5 has a different shape.

The plurality of cylindrical secondary batteries 300a may have a zigzag arrangement rather than a matrix arrangement. When each of the cylindrical secondary batteries 300a is arranged to be in contact with each other, three cylindrical secondary batteries 300a may be arranged to be in contact with each other. When the contact points of the three cylindrical secondary batteries 300a are connected to each other, an imaginary equilateral triangle may be formed.

A gap may be formed between the three cylindrical secondary batteries 300a. A pouch-type secondary battery 300b-5 may be provided in a shape corresponding to the formed gap. In this case, the pouch-type secondary battery 300b-5 may include only curved surfaces 301b.

Unless explicitly stated, the embodiments described above may be combined with other embodiments. Alternatively, it should be considered that combinations between embodiments are possible unless one embodiment is expressly limited in combination with another embodiment. Combinations of any embodiment with another embodiment are deemed to be disclosed herein.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

BP: Battery pack
BP1: Pack case
BM: Battery module
BA: Busbar assembly
10: Busbar
10a: First busbar
10b: Second busbar
20: Busbar frame
B: Secondary battery
100a: First battery case
100b: Second battery case
200b: Electrode
210b: Electrode tab
220a: First electrode lead
220b: Second electrode lead
221b: Protruding electrode lead
222b: Concave electrode lead
U: Unit
300a: Cylindrical secondary battery
301a: Side surface
304a: Lead surface
300b: Pouch-type secondary battery
301b: Curved surface
302b: Outer surface
302ba-2: First outer surface
302bb-2: Second outer surface
303b: Intervening surface
304b: Bottom surface
g-2: Intervening gap
300c-4: Gap filler

## Claims

1. A battery pack comprising:
cylindrical secondary batteries provided in plurality; and
pouch-type secondary batteries positioned between the plurality of cylindrical secondary batteries and having a curved surface corresponding to a side surface of the cylindrical secondary battery on a side facing the cylindrical secondary battery.

2. The battery pack according to claim 1,
wherein the pouch-type secondary batteries are provided in plurality to surround the side surface of the cylindrical secondary battery, and
the plurality of pouch-type secondary batteries and the cylindrical secondary battery form a unit.

3. The battery pack according to claim 2,
wherein the plurality of pouch-type secondary batteries forming the unit have an arrangement angle at equal intervals with respect to a central axis of the cylindrical secondary battery.

4. The battery pack according to claim 3,
wherein the plurality of pouch-type secondary batteries forming the unit have the arrangement angle of 90°.

5. The battery pack according to claim 1,
wherein the curved surface of the pouch-type secondary battery is provided to cover 1/4 of the side surface of the cylindrical secondary battery.

6. The battery pack according to claim 1,
wherein the pouch-type secondary battery further has outer surfaces that are planar on the opposite side of the curved surface.

7. The battery pack according to claim 6,
wherein the outer surfaces of the pouch-type secondary battery are provided in plurality.

8. The battery pack according to claim 6,
wherein the outer surfaces of the pouch-type secondary battery are provided in a pair perpendicular to each other.

9. The battery pack according to claim 6,
wherein the pouch-type secondary battery further has intervening surfaces connecting the curved surface and the outer surfaces.

10. The battery pack according to claim 9,
wherein the pouch-type secondary batteries are provided in plurality to surround the outer surface of the cylindrical secondary battery, and
the plurality of the pouch-type secondary batteries and the cylindrical secondary battery form a unit,
wherein the unit is configured such that the intervening surfaces of the pouch-type secondary battery face intervening surfaces of the neighboring pouch-type secondary battery.

11. The battery pack according to claim 9,
wherein the outer surfaces of the pouch-type secondary battery are provided in a pair perpendicular to each other, and
the intervening surfaces extend perpendicular to each of the outer surfaces from the pair of outer surfaces.

12. The battery pack according to claim 1,
wherein two or more pouch-type secondary batteries are provided between the cylindrical secondary batteries adjacent to each other.

13. The battery pack according to claim 2,
wherein the cross-section of the unit forms a square, and
the plurality of pouch-type secondary batteries have the same shape.

14. The battery pack according to claim 1,
wherein the pouch-type secondary battery comprises a plurality of electrodes that are bent and stacked.

15. The battery pack according to claim 14,
wherein electrodes closer to the curved surface among the plurality of electrodes are smaller in size.

16. A pouch-type secondary battery comprising:
a curved surface configured to correspond to a side surface of the cylindrical secondary battery;
outer surfaces that are planar positioned on the opposite side of the curved surface; and
intervening surfaces that are planar connecting the curved surface and the outer surfaces.

17. The pouch-type secondary battery according to claim 16,
wherein the curved surface, the intervening surfaces, and the outer surfaces are arranged in one direction.

18. The pouch-type secondary battery according to claim 16,
wherein the outer surfaces are provided in a pair perpendicular to each other.

19. The pouch-type secondary battery according to claim 18,
wherein the intervening surfaces extend perpendicular to each of the outer surfaces from the pair of outer surfaces.

20. A battery module comprising:
cylindrical secondary batteries provided in plurality; and
pouch-type secondary batteries positioned between the plurality of cylindrical secondary batteries and having a curved surface corresponding to a side surface of the cylindrical secondary battery on a side facing the cylindrical secondary battery.
